# EUROPÄISCHE PATENTSCHRIFT

(11) **EP 3 250 426 B1**
(45) Veröffentlichungstag und Bekanntmachung des Hinweises auf die Patenterteilung: **20.10.2021**
(21) Anmeldenummer: 16700615.4
(22) Anmeldetag: 14.01.2016
(51) Int. Cl.: B60W 30/12, B60W 30/165, B62D 15/02

(54) **VERFAHREN UND VORRICHTUNG ZUM BETREIBEN EINES FAHRZEUGS**
METHOD AND DEVICE FOR OPERATING A VEHICLE
PROCÉDÉ ET DISPOSITIF POUR FAIRE FONCTIONNER UN VÉHICULE

(30) Priorität: 29.01.2015 DE 102015201555
(43) Veröffentlichungstag der Anmeldung: 06.12.2017
(73) Patentinhaber: Robert Bosch GmbH, 70442 Stuttgart (DE)
(72) Erfinder: PINK, Oliver, 70469 Stuttgart (DE); NORDBRUCH, Stefan, 70806 Kornwestheim (DE); WILHELM, Ulf, 71277 Rutesheim (DE); SCHROEDER, Christoph, 74385 Pleidelsheim (DE); RAU, Svetlana, 70378 Stuttgart (DE)
(86) Internationale Anmeldenummer: PCT/EP2016/050673
(87) Internationale Veröffentlichungsnummer: WO 2016/120083

(56) Entgegenhaltungen:
- EP-A2- 2 939 894
- WO-A1-2008/071262
- DE-A1- 10 017 279
- DE-A1-102008 008 172
- DE-A1-102011 116 301
- JP-A- 2004 206 275

## Beschreibung

Die Erfindung betrifft ein Verfahren und eine Vorrichtung zum Betreiben eines Fahrzeugs. Die Erfindung betrifft ferner ein Computerprogramm.

### Stand der Technik

Fahrerassistenzsysteme, die einen Fahrer bei einem Spurhalten unterstützen, sind als solche bekannt. Solche bekannten Fahrerassistenzsysteme orientieren sich in der Regel an Fahrspurmarkierungen, um die Fahrspur zu erkennen und das Fahrzeug in der Fahrspur zu halten.

Die WO 2008/071262 A1 offenbart ein Fahrerassistenzsystem und ein Verfahren zur Unterstützung des Fahrers eines Fahrzeugs bei der Fahrzeugführung, bei dem mittels eines Fahrspurerkennungssystems eine vom Fahrzeug befahrene momentane Fahrspur erkannt wird.

Die DE 10 2008 008 172 A1 offenbart ein Verfahren zur Längs- und Querführungsunterstützung des Fahrers eines Fahrzeugs, bei dem die Längsführungsunterstützung als Abstandsregelung zur Regelung des Abstands zwischen dem Fahrzeug und einem diesem vorausfahrenden Führungsfahrzeug durchgeführt wird.

Die DE 100 17 279 A1 offenbart ein System zur automatischen Folgeführung, insbesondere zur automatischen Staufolgeführung eines Kraftfahrzeugs.

### Offenbarung der Erfindung

Die der Erfindung zugrunde liegende Aufgabe kann darin gesehen werden, ein effizientes Konzept zum Betreiben eines Fahrzeugs bereitzustellen, welches es ermöglicht, ein Fahrzeug in unterschiedlichen Verkehrssituationen autonom zu betreiben.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines Fahrzeugs mit den technischen Merkmalen des Anspruchs 1 bereitgestellt.

Nach noch einem Aspekt wird eine Vorrichtung zum Betreiben eines Fahrzeugs mit den technischen Merkmalen des Anspruchs 10 bereitgestellt.

Gemäß einem weiteren Aspekt wird ein Computerprogramm bereitgestellt, welches Programmcode zur Durchführung des Verfahrens zum Betreiben eines Fahrzeugs umfasst, wenn das Computerprogramm auf einem Computer ausgeführt wird.

Nach einem Aspekt wird ein Fahrzeug bereitgestellt, welches eingerichtet oder ausgebildet ist, das Verfahren zum Betreiben eines Fahrzeugs durchzuführen oder auszuführen.

Die Erfindung umfasst also insbesondere und unter anderem den Gedanken, zwischen den beiden autonomen Betriebsmodi des Fahrzeugs abhängig von dem erfassten Fahrzeugumfeld umzuschalten. Dadurch wird insbesondere der technische Vorteil bewirkt, dass effizient auf eine konkret vorliegende Verkehrssituation reagiert werden kann. Denn je nach konkret vorliegender Verkehrssituation kann es sinnvoll sein, dass das Fahrzeug entweder in dem ersten Betriebsmodus oder in dem zweiten Betriebsmodus betrieben wird. Somit wird also das Fahrzeug in die Lage versetzt, dass es auch bei Vorliegen einer Situation, in welcher eine autonome Fahrt gemäß dem momentanen Betriebsmodus nicht mehr sinnvoll ist, dennoch weiter autonom betrieben werden kann, insofern es in den anderen Betriebsmodus umgeschaltet wird.

So kann es also zum Beispiel Situationen geben, in denen ein autonomes Fahren basierend auf einer Erfassung von Fahrspurmarkierungen nicht mehr möglich oder sinnvoll ist. Denn zum Beispiel können Fahrspurmarkierungen fehlen. Ein entsprechend autonomes Weiterfahren ist also nicht mehr möglich. Da aber erfindungsgemäß vorgesehen ist, dass in einem solchen Fall in den zweiten Betriebsmodus umgeschaltet wird, kann das Fahrzeug weiter autonom fahren. Denn in diesem zweiten Betriebsmodus werden Fahrspurmarkierungen ignoriert. Das heißt also, dass in dem zweiten Betriebsmodus Fahrspurmarkierungen für die autonome Fahrt nicht berücksichtigt, also ignoriert, werden.

Die Formulierung "Fahrspurmarkierungen ignorieren" bedeutet also insbesondere, dass das Fahrzeug bei seiner autonomen Fahrt, also bei dem autonomen Folgen des vorausfahrenden Fahrzeugs, eventuell vorhandene Fahrspurmarkierungen von einer oder mehreren Fahrspuren ignoriert, also nicht berücksichtigt. Nicht berücksichtigen heißt, dass das Fahrzeug zum Beispiel eine Trajektorienplanung nicht mehr auf eventuell vorhandene Fahrspurmarkierungen aufbaut. Das heißt also, dass eventuell vorhandene Fahrspurmarkierungen keine Rolle mehr bei einer autonomen Regelung einer Isttrajektorie des Fahrzeugs auf eine Solltrajektorie spielen.

Der erste Betriebsmodus ist also ein Betriebsmodus, in welchem das Fahrzeug basierend auf einer Erfassung von Fahrspurmarkierungen einer Fahrspur autonom in der Fahrspur fährt. Das heißt also, dass sich das Fahrzeug im ersten Betriebsmodus an den Fahrspurmarkierungen orientiert, um das Fahrzeug autonom in der Fahrspur zu halten. Das heißt also insbesondere, dass das Fahrzeug die Fahrspurmarkierungen als Orientierungshilfe nimmt und insbesondere dafür verwendet, um eine Fahrspur zu erkennen. In diesem ersten Betriebsmodus wird also das Fahrzeug autonom in der Fahrspur gehalten.

Der erste Betriebsmodus führt in der Regel zu einer autonomen Fahrt des Fahrzeugs, welche üblicherweise gesetzeskonform ist. In Deutschland wäre dies die Straßenverkehrsordnung (StVO), die besagt, dass ein Fahrzeug in der Regel innerhalb von Fahrspurmarkierungen einer Fahrspur zu fahren ist. Das heißt also, dass in dem ersten Betriebsmodus das Fahrzeug gesetzeskonform, beispielsweise StVO-konform, autonom fährt.

Das Verhalten des Fahrzeugs in dem ersten Betriebsmodus kann somit insbesondere als ein StVO-Verhalten bezeichnet werden, allgemein als ein gesetzeskonformes Verhalten.

In dem zweiten Betriebsmodus ignoriert das Fahrzeug eventuell vorhandene Fahrspurmarkierungen und folgt autonom einem dem Fahrzeug vorausfahrenden Fahrzeug. Das heißt also, dass sich das Fahrzeug bei seiner autonomen Fahrt an dem vorausfahrenden Fahrzeug orientiert. Es ignoriert hierbei Fahrspurmarkierungen, sodass das Fahrzeug nicht mehr zwangsläufig in der Fahrspur fahren wird. Es kann also zu Situationen kommen, in welchen das Fahrzeug aufgrund des Folgens die Fahrspur verlässt, also über die Fahrspurmarkierung fährt. Ein solches Spurverlassen, also ein Überfahren von Fahrspurmarkierungen, ist im ersten Betriebsmodus nicht gewollt und soll gerade im ersten Betriebsmodus verhindert werden, ist also ein unzuverlässiges Verhalten. Im zweiten Betriebsmodus hingegen ist ein solches Verhalten zulässig.

Somit kann also effektiv und effizient auf Situationen reagiert werden, in welchen ein autonomes Spurhalten nicht sinnvoll ist.

Auch kann es Situationen geben, in denen Fahrspurmarkierungen nicht eindeutig voneinander unterschieden werden können. Beispielsweise, weil es zu viele Fahrspurmarkierungen gibt. Dies kann zum Beispiel bei einem Fahren in einem Baustellenbereich der Fall sein. Ferner gibt es Straßen, auf denen keine Fahrspurmarkierungen, gegebenenfalls nur kurzfristig, mehr vorhanden sind. Das Fahrzeug könnte also gar nicht in dem ersten Betriebsmodus betrieben werden.

Ein Fahrer müsste somit manuell wieder das Fahrzeug führen. Da aber erfindungsgemäß in einer solchen Situation in den zweiten Betriebsmodus umgeschaltet werden kann, kann das Fahrzeug weiter autonom fahren, ohne dass ein Fahrer hierfür eingreifen müsste.

Nach einer Ausführungsform ist vorgesehen, dass die Vorrichtung zum Betreiben eines Fahrzeugs eingerichtet oder ausgebildet ist, das Verfahren zum Betreiben eines Fahrzeugs auszuführen oder durchzuführen.

Nach einer Ausführungsform umfasst die Erfassungseinrichtung eine Umfeldsensorik zum Erfassen des Fahrzeugumfelds. Die Umfeldsensorik umfasst insbesondere einen oder mehrere Umfeldsensoren. Ein Umfeldsensor ist zum Beispiel: ein Ultraschallsensor, ein Radarsensor, ein Lidarsensor, ein Lasersensor oder ein Videosensor.

Das erfasste Fahrzeugumfeld wird also insbesondere dahingehend analysiert, ob ein Umschalten durchgeführt werden soll oder nicht. Das heißt also, dass insbesondere eine Situationsanalyse basierend auf dem erfassten Fahrzeugumfeld der konkret vorliegenden, also der momentanen, Verkehrssituation durchgeführt wird. Abhängig von der Situationsanalyse wird dann entschieden, ob umgeschaltet werden soll oder nicht.

Es ist vorgesehen, dass, wenn das Fahrzeug im ersten Betriebsmodus betrieben und basierend auf dem erfassten Fahrzeugumfeld ein dem Fahrzeug vorausliegendes Hindernis detektiert wird, in den zweiten Betriebsmodus umgeschaltet wird.

Dadurch wird insbesondere der technische Vorteil bewirkt, dass das Hindernis effizient umfahren werden kann. Denn da in der Regel das vorausfahrende Fahrzeug dem Hindernis ausweichen wird, wird aufgrund des Folgens ebenfalls dem Hindernis ausgewichen.

In einer anderen Ausführungsform ist vorgesehen, dass, wenn das Fahrzeug im ersten Betriebsmodus betrieben und basierend auf dem erfassten Fahrzeugumfeld ein oder mehrere vorausfahrende ihre Fahrspur ignorierende Fahrzeuge detektiert werden, in den zweiten Betriebsmodus umgeschaltet wird.

Dadurch wird insbesondere der technische Vorteil bewirkt, dass sicher erkannt werden kann, wenn ein Spurhalten nicht mehr sinnvoll ist. Denn wenn die vorausfahrenden Fahrzeuge ihre Fahrspur ignorieren, also eventuelle Fahrspurmarkierungen überfahren, so ist dies ein starkes Indiz dafür, dass ein Spurhalten nicht mehr der Situation angebracht ist. Sinnvoller ist es hier, den vorausfahrenden Fahrzeugen zu folgen, was aufgrund des Umschaltens in den zweiten Betriebsmodus dann auch durchgeführt wird.

Nach einer anderen Ausführungsform ist vorgesehen, dass, wenn das Fahrzeug im ersten Betriebsmodus betrieben und basierend auf dem erfassten Fahrzeugumfeld ein ungleichförmiges Strömungsverhalten von weiteren Verkehrsteilnehmern detektiert wird, in den zweiten Betriebsmodus umgeschaltet wird.

Dadurch wird insbesondere der technische Vorteil bewirkt, dass eine Situation, in welcher vom ersten in den zweiten Betriebsmodus umgeschaltet werden soll, effizient erkannt werden kann. Denn das ungleichförmige Strömungsverhalten zeigt an, dass die weiteren Verkehrsteilnehmer ihre eigene Fahrspur verlassen.

Ein Strömungsverhalten bezeichnet insbesondere ein Verhalten der Richtungen der Geschwindigkeiten der Verkehrsteilnehmer. Das heißt also, dass eine Strömung die vektoriellen Richtungen der jeweiligen Geschwindigkeiten der Verkehrsteilnehmer umfasst. Verkehrsteilnehmer sind beispielsweise weitere Fahrzeuge. Ungleichförmig bedeutet "nicht gleichförmig".

In einer anderen Ausführungsform ist vorgesehen, dass nur dann in den anderen Betriebsmodus umgeschaltet wird, wenn eine oder mehrere der folgenden Bedingungen erfüllt sind: eine Fahrzeuggeschwindigkeit ist einem zugelassenen Bereich, eine Trajektorie respektive ein Fahrschlauch, die respektive in dem das Fahrzeug fahren wird, ist respektive sind kollisionsfrei, weitere Fahrzeuge fahren in erkennbaren Kolonnen, ein Mindestabstand einer Trajektorie respektive eines Fahrschlauchs, die respektive in dem das Fahrzeug fahren wird, zu weiteren Verkehrsteilnehmern ist respektive sind eingehalten, eine Relativgeschwindigkeit des Fahrzeugs zu einem oder zu weiteren Verkehrsteilnehmern ist in einem zugelassenen Bereich, eine Abweichung von einem gesetzeskonformen Verhalten ist in einem vorgegebenen Bereich, zum Beispiel ist die Abweichung ein Herausfahren aus der eigenen Fahrspur und zum Beispiel ist der vorgegebene Bereich dann eine maximale Distanzangabe.

Dadurch wird insbesondere der technische Vorteil bewirkt, dass feiner und empfindlicher vorgegeben werden kann, wann ein Umschalten durchgeführt werden soll, also welche Bedingungen vorliegen müssen. So kann individuell auf jeweilige Verkehrssituationen eingegangen werden. Insbesondere kann dadurch eine Fahrzeugsicherheit erhöht werden. Insbesondere kann dadurch ein Kollisionsrisiko verringert werden.

So ist also zum Beispiel eine Bedingung, dass eine Fahrzeuggeschwindigkeit in einem zugelassenen Bereich ist. Das heißt also, dass eine momentane Fahrzeuggeschwindigkeit sich innerhalb eines vorbestimmten Geschwindigkeitsbereichs befinden muss, damit umgeschaltet wird.

Eine weitere Bedingung ist zum Beispiel, dass eine Trajektorie respektive ein Fahrschlauch, die respektive in dem das Fahrzeug fahren wird, kollisionsfrei ist respektive sind. Somit kann insbesondere in vorteilhafter Weise sichergestellt werden, dass Kollisionen vermieden werden können.

Wenn Fahrzeuge in erkennbaren Kolonnen fahren, so ist dies eine Bedingung beispielsweise dafür, vom ersten in den zweiten Betriebsmodus umzuschalten. Denn eine Kolonnenfahrt wird üblicherweise nur dann durchgeführt, wenn ein Spurhalten nicht mehr sinnvoll ist. Eine Kolonne im Sinne der vorliegenden Erfindung bezeichnet insbesondere eine Anzahl von Fahrzeugen, die hintereinander fahren und die insbesondere ein gleiches oder ein ähnliches Fahrverhalten aufweisen.

Dadurch, dass ein Mindestabstand eingehalten wird oder werden muss, damit ein Umschalten erlaubt wird oder zugelassen wird, kann ebenfalls in vorteilhafter Weise ein Kollisionsrisiko verringert werden. Dies gilt analog auch dafür, dass eine Relativgeschwindigkeit in einem zugelassenen oder vorbestimmten Geschwindigkeitsbereich sein muss, um die Umschaltung zuzulassen.

Die Abweichung von einem gesetzeskonformen Verhalten kann beispielsweise sein, dass das Fahrzeug aus der eigenen Fahrspur herausfährt. Denn das Herausfahren aus der eigenen Fahrspur ist üblicherweise eine Abweichung von dem üblichen Verhalten, welches besagt, dass üblicherweise in der Fahrspur zu fahren ist. Wenn aber nur um eine vorbestimmte maximale Distanz aus der eigenen Fahrspur herausgefahren wird, so ist dies dann eine Erfüllung der Bedingung dafür, dass umgeschaltet wird. Das heißt, dass zum Beispiel eine Abweichung vom StVo-Verhalten, die in einem vorgegebenen Bereich liegt, eine Bedingung ist, die erfüllt sein muss, damit vom ersten in den zweiten Betriebsmodus umgeschaltet wird.

In einer anderen Ausführungsform ist vorgesehen, dass ein Fahrer überwacht wird und das Umschalten von dem einen in den anderen Betriebsmodus zusätzlich abhängig von der Fahrerüberwachung durchgeführt wird.

Dadurch wird insbesondere der technische Vorteil bewirkt, dass ein aktuelles Fahrerverhalten mit in die Entscheidung einfließen kann, ob umgeschaltet werden soll oder nicht.

Nach einer Ausführungsform ist vorgesehen, dass abhängig von der Fahrerüberwachung ein den Fahrer betreffendes Aufmerksamkeitsmaß ermittelt wird, wobei abhängig von einem Vergleich des ermittelten Aufmerksamkeitsmaß mit einem vorbestimmten Aufmerksamkeitsschwellwert umgeschaltet wird.

Dadurch wird insbesondere der technische Vorteil bewirkt, dass das Umschalten abhängig davon gemacht werden kann, wie aufmerksam ein Fahrer ist. So ist beispielsweise vorgesehen, dass nur dann umgeschaltet wird, wenn das ermittelte Aufmerksamkeitsmaß größer oder größer gleich dem vorbestimmten Aufmerksamkeitsschwellwert ist. Anderenfalls ist insbesondere vorgesehen, dass nicht umgeschaltet wird, also das Fahrzeug beispielsweise in dem momentanen Betriebsmodus weiter betrieben wird, oder beispielsweise der Fahrer aufgefordert wird, die Führung des Fahrzeugs zu übernehmen.

Die Fahrerüberwachung wird nach einer Ausführungsform mittels eines Fahrerüberwachungssystems durchgeführt. Ein solches Fahrerüberwachungssystem umfasst beispielsweise eine Innenraumsensorik zum sensorischen Erfassen oder Überwachen eines Fahrzeuginnenraums. Eine Innenraumsensorik umfasst beispielsweise einen Videosensor, einen Ultraschallsensor, einen Radarsensor, einen Lidarsensor oder einen Lasersensor. Insbesondere umfasst die Innenraumsensorik mehrere solcher Sensoren, die insbesondere gleich oder vorzugsweise unterschiedlich gebildet sein können.

Eine Fahrerüberwachung umfasst insbesondere eine Müdigkeitsüberwachung. Eine Fahrerüberwachung umfasst insbesondere eine Überwachung eines Fahrerblicks. So wird beispielsweise überprüft, ob ein Fahrer seinen Blick auf die Straße gerichtet hat oder nicht. So ist also nach einer Ausführungsform vorgesehen, dass nur dann vom ersten in den zweiten oder vom zweiten in den ersten Betriebsmodus umgeschaltet wird, wenn ein Fahrer seinen Blick auf die Straße gerichtet hat.

Nach einer Ausführungsform ist vorgesehen, dass ein Hinweis ausgegeben wird, dass ein Umschalten beabsichtigt ist. Der Hinweis wird beispielsweise an den Fahrer ausgegeben. Somit wird insbesondere der technische Vorteil bewirkt, dass dem Fahrer oder auch weiteren Fahrzeuginsassen klar gemacht wird, dass ein Umschalten beabsichtigt ist. Diese können somit in vorteilhafter Weise in Kenntnis darüber gesetzt werden. Insbesondere besteht die Kenntnis darin, dass eine Situation vorliegt, die ein Umschalten notwendig macht. Insbesondere werden mehrere Hinweise ausgegeben.

Ein Hinweis umfasst beispielsweise einen akustischen und/oder einen haptischen und/oder einen visuellen Hinweis.

Nach einer Ausführungsform ist vorgesehen, dass nur dann von dem einen in den anderen Betriebsmodus umgeschaltet wird, wenn eine Umschaltbestätigung erfasst wird. Dadurch wird insbesondere der technische Vorteil bewirkt, dass beispielsweise ein Fahrer explizit das Umschalten bestätigen muss.

Das heißt also insbesondere, dass der Fahrer bestätigen muss, dass umgeschaltet werden soll. Es findet also kein automatisches Umschalten statt.

Nach einer Ausführungsform ist vorgesehen, dass, wenn das Fahrzeug im zweiten Betriebsmodus betrieben wird, in den ersten Betriebsmodus nur dann umgeschaltet wird, wenn basierend auf dem erfassten Fahrzeugumfeld detektiert wird, dass eine Situation, welche dazu führte, dass vom ersten Betriebsmodus in den zweiten umgeschaltet wurde, vorbei ist.

Dadurch wird insbesondere der technische Vorteil bewirkt, dass sichergestellt ist, dass die Situation, welche dazu führte, dass vom ersten Betriebsmodus in den zweiten umgeschaltet wurde, vorbei ist, sodass dann sicher in den ersten Betriebsmodus zurückgeschaltet werden kann. Somit kann in vorteilhafter Weise verhindert werden, dass zu früh zurück in den ersten Betriebsmodus geschaltet wird.

Ausführungsformen hinsichtlich der Vorrichtung ergeben sich analog aus Ausführungsformen hinsichtlich des Verfahrens und umgekehrt. Das heißt also, dass sich technische Merkmale hinsichtlich des Verfahrens aus technischen Merkmalen analog hinsichtlich der Vorrichtung und umgekehrt ergeben. Funktionalitäten und technische Merkmale der Vorrichtung ergeben sich analog aus dem Verfahren und umgekehrt.

Nach einer Ausführungsform umfasst das Fahrzeug einen ersten Betriebsmodus, in welchem das Fahrzeug basierend auf einer Erfassung von Fahrspurmarkierungen einer Fahrspur autonom in der Fahrspur fährt.

Nach einer Ausführungsform umfasst das Fahrzeug einen zweiten Betriebsmodus, in welchem das Fahrzeug autonom einem vorausfahrenden Fahrzeug Fahrspurmarkierungen ignorierend folgt.

Die Formulierung "respektive" umfasst insbesondere die Formulierung "und/oder".

Die Erfindung wird im Folgenden anhand von bevorzugten Ausführungsbeispielen näher erläutert. Hierbei zeigen
- Fig. 1: ein Ablaufdiagramm eines Verfahrens zum Betreiben eines Fahrzeugs,
- Fig. 2: eine Vorrichtung zum Betreiben eines Fahrzeugs,
- Fig. 3: ein Fahrzeug und
- Fig. 4: ein Szenario, welches das erfindungsgemäße Konzept erläutert.

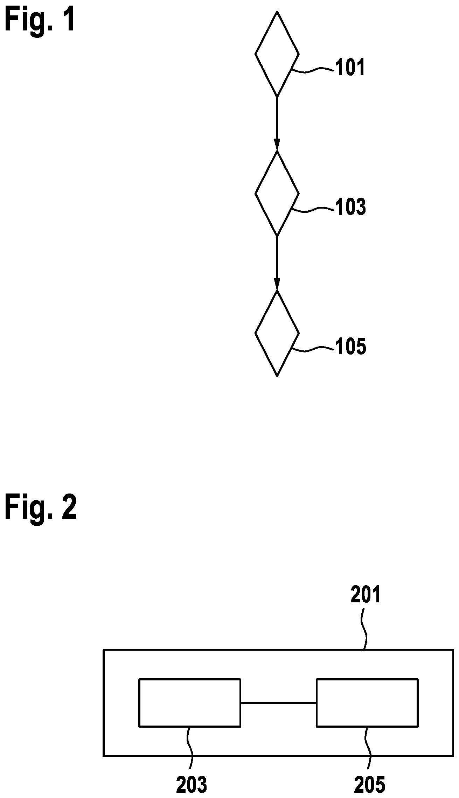

Fig. 1 zeigt ein Ablaufdiagramm eines Verfahrens zum Betreiben eines Fahrzeugs.

Das Fahrzeug ist in einem ersten Betriebsmodus, in welchem das Fahrzeug basierend auf einer Erfassung von Fahrspurmarkierungen einer Fahrspur autonom in der Fahrspur fährt, betreibbar. Das Fahrzeug ist ferner in einem zweiten Betriebsmodus betreibbar, in welchem das Fahrzeug autonom einem vorausfahrenden Fahrzeug Fahrspurmarkierungen ignorierend folgt.

Gemäß einem Schritt 101 wird das Fahrzeug in einem der beiden Betriebsmodi betrieben. Das heißt also, dass das Fahrzeug beispielsweise im ersten Betriebsmodus betrieben wird. Das heißt also beispielsweise, dass das Fahrzeug in dem zweiten Betriebsmodus betrieben wird. Das heißt also, dass das Fahrzeug beispielsweise basierend auf einer Erfassung von Fahrspurmarkierungen einer Fahrspur autonom in der Fahrspur fährt. Das heißt also insbesondere, dass das Fahrzeug beispielsweise einem vorausfahrenden Fahrzeug Fahrspurmarkierungen ignorierend folgt. Dies autonom.

In einem Schritt 103 ist vorgesehen, dass ein Fahrzeugumfeld erfasst wird. Dies beispielsweise mittels einer Umfeldsensorik.

In einem Schritt 105 ist vorgesehen, dass von dem einen Betriebsmodus der beiden Betriebsmodi in den anderen der beiden Betriebsmodi abhängig von dem erfassten Fahrzeugumfeld umgeschaltet wird. Das heißt also beispielsweise, dass abhängig von dem erfassten Fahrzeugumfeld vom ersten Betriebsmodus in den zweiten Betriebsmodus oder umgekehrt geschaltet wird.

Fig. 2 zeigt eine Vorrichtung 201 zum Betreiben eines Fahrzeugs.

Das Fahrzeug ist in zwei Betriebsmodi betreibbar, wie bereits vorstehend erläutert.

Die Vorrichtung 201 umfasst eine Steuerungseinrichtung 203 zum Betreiben des Fahrzeugs in einem der beiden Betriebsmodi. Das heißt also, dass die Steuerungseinrichtung 203 das Fahrzeug beispielsweise im ersten Betriebsmodus betreibt. Somit kann also die Steuerungseinrichtung 203 beispielsweise das Fahrzeug autonom in einer Fahrspur basierend auf einer Erfassung von Fahrspurmarkierungen steuern.

Die Steuerungseinrichtung 203 kann ferner das Fahrzeug in dem zweiten Betriebsmodus betreiben, Das heißt also, dass die Steuerungseinrichtung 203 das Fahrzeug autonom so steuert, dass es einem vorausfahrenden Fahrzeug folgt und hierbei Fahrspurmarkierungen ignoriert. Das heißt also, dass die Steuerungseinrichtung für das autonome Folgen Fahrspurmarkierungen ignoriert, also nicht berücksichtigt.

Die Vorrichtung 201 umfasst ferner eine Erfassungseinrichtung 205 zum Erfassen eines Fahrzeugumfelds. Die Erfassungseinrichtung 205 umfasst beispielsweise eine Umfeldsensorik.

Die Steuerungseinrichtung 203 ist ausgebildet, von dem einen Betriebsmodus in den anderen der beiden Betriebsmodi abhängig von dem erfassten Fahrzeugumfeld umzuschalten.

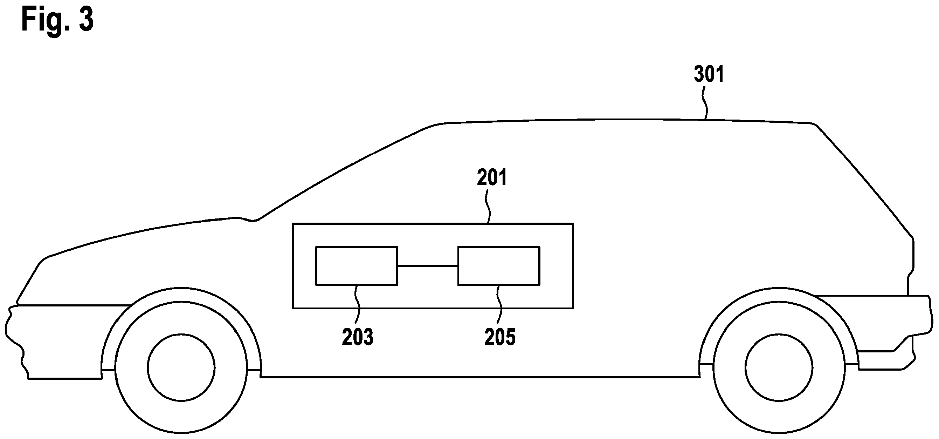

Fig. 3 zeigt ein Fahrzeug 301.

Das Fahrzeug 301 umfasst die Vorrichtung 201 der Fig. 2.

Nach einer Ausführungsform ist das Fahrzeug 301 eingerichtet oder ausgebildet, das erfindungsgemäße Verfahren zum Betreiben eines Fahrzeugs aus- oder durchzuführen.

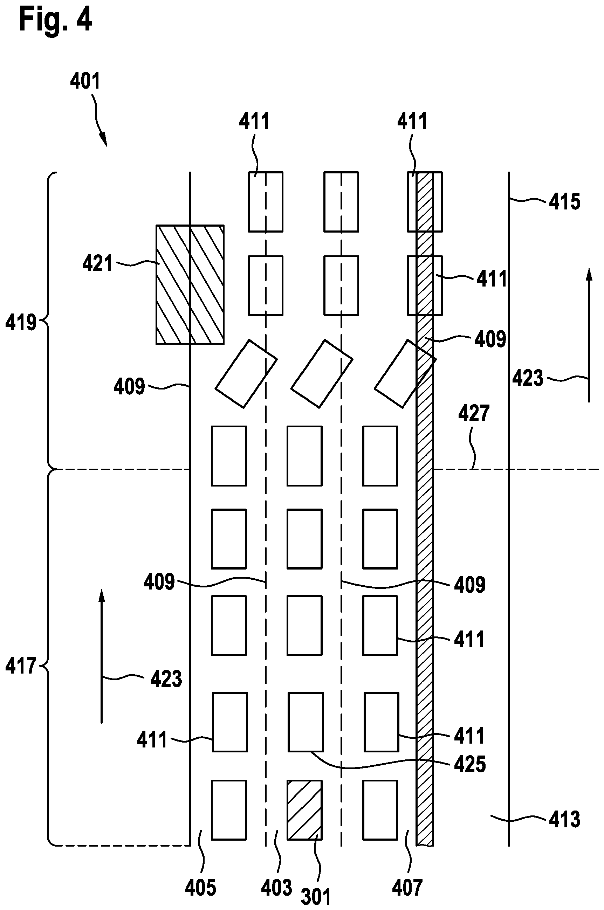

Fig. 4 zeigt ein Szenario 401, welches das erfindungsgemäße Konzept erläutert.

Gezeigt ist das Fahrzeug 301, wobei der Übersicht halber die Vorrichtung 201 nicht dargestellt ist. Das Fahrzeug 301 kann auch als ein Egofahrzeug bezeichnet werden. Das Fahrzeug 301 fährt in der mittleren Fahrspur 403 von drei Fahrspuren 405, 407 und eben die Fahrspur 403. Es sind Fahrspurmarkierungen 409 vorgesehen, die die Fahrspuren 403, 405 und 407 voneinander abgrenzen.

Auf den drei Fahrspuren 403, 405, 407 fahren mehrere Fahrzeuge, die das Bezugszeichen 411 aufweisen.

Eine Fahrtrichtung der Fahrzeuge ist mit dem Bezugszeichen 423 gekennzeichnet.

Das Bezugszeichen 413 zeigt auf einen Standstreifen, der sich in Fahrtrichtung rechts von der ganz rechten Fahrspur 407 befindet. Das Bezugszeichen 415 zeigt auf eine Standstreifenbegrenzung.

Die in Fig. 4 gemäß dem Szenario 401 gezeigte Straße umfassend die drei Fahrspuren 403, 405 und 407 ist zur Illustration beispielhafterweise in zwei Abschnitte 417 und 419 eingeteilt, wobei diese Abschnitte mittels einer jeweiligen geschweiften Klammer gekennzeichnet sind. In dem Abschnitt 417 fährt das Fahrzeug 301 im ersten Betriebsmodus. Das heißt also, dass es hier die Fahrspurmarkierungen 409 erfasst, um in seiner Fahrspur 403 zu bleiben. Das heißt also, dass beispielsweise mittels einer Umfeldsensorik die Fahrspurmarkierungen 409 erfasst werden, sodass das Fahrzeug 301 autonom in der Fahrspur 403 gehalten wird.

Im Abschnitt 419 ist ein Fahrzeug 421 vorgesehen, welches teilweise auf der ganz linken Fahrspur 405 abgestellt ist. Dieses Fahrzeug 421 stellt für Fahrzeuge, welche auf der ganz linken Fahrspur 405 fahren, ein Hindernis dar. Das heißt also, dass die Fahrzeuge 411, die auf der linken Fahrspur 405 fahren, teilweise zumindest ihre Fahrspur 405 verlassen müssen, um dem Hindernis, also dem Fahrzeug 421, auszuweichen.

Dies hat zur Folge, dass auch Fahrzeuge 411, welche sich auf der mittleren Fahrspur 403 und auf der ganz rechten Fahrspur 407 befinden, weiter nach rechts ausweichen müssen.

Das heißt also, dass es zu einem bestimmten Zeitpunkt oder ab einer bestimmten Stelle nicht mehr sinnvoll ist, dass das Fahrzeug 301 weiter seine eigene Fahrspur 403 basierend auf den erfassten Fahrspurmarkierungen 409 autonom hält. Das heißt also, dass in einer solchen Situation ein Weiterbetreiben des Fahrzeugs im ersten Betriebsmodus nicht sinnvoll ist. Denn es könnte sonst zu einer Kollision mit weiteren Fahrzeugen 411 kommen, die dem Fahrzeug 421 ausweichen.

Erfindungsgemäß ist nun vorgesehen, dass dann in den zweiten Betriebsmodus umgeschaltet wird, in welchem das Fahrzeug seinem vorausfahrenden Fahrzeug, hier explizit mit dem Bezugszeichen 425 gekennzeichnet, autonom folgt und hierbei die Fahrspurmarkierungen 409 ignoriert. Dies wird dann zur Folge haben, dass das Fahrzeug 301 nicht mehr in seiner eigenen Fahrspur fahren wird, sondern vielmehr aufgrund des Ausweichens seinem vorausfahrenden Fahrzeug 425 folgt und die Fahrspur 403 verlassen wird, also Fahrspurmarkierungen 409 überfahren wird.

Die Grenze zwischen den beiden Abschnitten 417, 419 ist symbolisch mit einer gestrichelten Linie mit dem Bezugszeichen 427 gekennzeichnet. Ab dieser gestrichelten Linie 427 wird vom ersten Betriebsmodus in den zweiten Betriebsmodus geschaltet. Dies insbesondere deshalb, da das Fahrzeug 301 basierend auf dem erfassten Umfeld erkennt, dass ein Hindernis, hier das Fahrzeug 421, vorausliegt, sodass ein Ausweichen notwendig ist. Ferner kann der Ort oder der Zeitpunkt des Umschaltens auch dadurch erkannt werden, wenn die vorausfahrenden Fahrzeuge nicht mehr in ihrer eigenen Fahrspur fahren, also ihre Fahrspur verlassen. Insbesondere kann der Ort oder der Zeitpunkt auch dadurch bestimmt werden, indem ein Strömungsverhalten der weiteren Fahrzeuge 411 als nicht gleichförmig erkannt wird.

Sobald das Fahrzeug 301 an dem Hindernis 421 vorbeigefahren ist, ist beispielsweise vorgesehen, dass wieder zurück in den ersten Betriebsmodus geschaltet wird. Insbesondere wird erst dann zurück in den ersten Betriebsmodus geschaltet, wenn erkannt wird, dass vorausfahrende Fahrzeuge und/oder weitere Fahrzeuge 411, die parallel zu dem Fahrzeug 301 fahren, wieder zurück in ihre eigene Fahrspur gefahren sind. Insbesondere wird nur dann zurückgeschaltet in den ersten Betriebsmodus, wenn ein Strömungsverhalten der weiteren Fahrzeuge 411 als gleichförmig erkannt wird.

Das erfindungsgemäße Konzept ist insbesondere bei einer Staupilotfunktion anwendbar, das heißt also beispielsweise, dass ein Staupilotfahrerassistenzsystem vorgesehen ist, welches das erfindungsgemäße Konzept integriert hat.

Die Erfindung umfasst also insbesondere und unter anderem den Gedanken, dass, in einem Fall, wo aufgrund der Situation nicht mehr in der Fahrspur gefahren werden kann, umgeschaltet wird, insofern nun dem vorausfahrenden Fahrzeug gefolgt wird und nicht mehr den Fahrspurmarkierungen gefolgt werden. Es wird also zum Beispiel von einem StVO-konformen Verhalten auf ein Kolonnen-/Manöver-Verhalten umgeschaltet. Somit kann also das Fahrzeug gegebenenfalls auf einer Fahrspurmarkierung fahren. Im zweiten Betriebsmodus ist also das Fahrverhalten des Fahrzeugs 301 zum Beispiel ein Kolonnen - und/oder ein Manöververhalten. Das Fahrzeug 301 folgt also insbesondere im zweiten Betriebsmodus den Manövern des vorausfahrenden Fahrzeugs. Insbesondere fährt das Fahrzeug 301 im zweiten Betriebsmodus mit dem vorausfahrenden Fahrzeug als oder wie eine Kolonne.

Dieses erfindungsgemäße Umschalten vom ersten in den zweiten Betriebsmodus ist insbesondere vorgesehen in Situationen, in welchen ein Hindernis umfahren werden muss. Insbesondere kann das erfindungsgemäße Konzept des Umschaltens von dem ersten in den zweiten Betriebsmodus auch in folgenden Situationen vorgesehen sein:
Ein Fahren in Baustellen, die üblicherweise viele Spurmarkierungen umfassen, die von üblichen Fahrerassistenzsystemen nicht mehr eindeutig unterschieden werden können.

Straßen, auf denen (kurzfristig) keine Spurmarkierungen mehr vorhanden sind.

Durch das erfindungsgemäße Konzept der Erfassung des Fahrzeugumfelds und der darauf basierenden Umschaltung können in vorteilhafter Weise Situationen erkannt werden, die es notwendig machen, dass die Fahraufgabe eines autonomen Fahrens basierend auf erkannten Fahrspurmarkierungen zu einer Fahraufgabe eines autonomen Fahrens basierend auf einem Verfolgen des vorausfahrenden Fahrzeugs unter einem Ignorieren der Fahrspurmarkierungen umgeschaltet wird, also zum Beispiel zu einem Manöver-/Kolonnen-Verhalten.

Erkannt wird eine solche Situation, in welcher ein Umschalten notwendig ist, beispielsweise anhand von zumindest einem oder mehreren der folgenden Kriterien:
Ein oder mehrere Hindernisse werden auf einer oder mehreren Fahrspuren erkannt und/oder
ein vorausfahrendes Fahrzeug und beispielsweise parallel fahrende Fahrzeuge fahren nicht mehr in ihren eigenen Fahrspuren und/oder
ein Strömungsverhalten (Richtungen der Geschwindigkeiten) der Verkehrsteilnehmer, insbesondere der weiteren Fahrzeuge, ist nicht mehr gleichförmig.

Nach einer weiteren Ausführungsform wird nur dann umgeschaltet, wenn zumindest eine oder mehrere der folgenden Bedingungen und/oder Einschränkungen erfüllt sind:
Eine Fahrzeuggeschwindigkeit ist in einem zugelassenen Bereich.

Eine Trajektorie respektive ein Fahrschlauch, die respektive den das Fahrzeug fahren wird, ist kollisionsfrei.

Weitere oder andere Fahrzeuge fahren in erkennbaren Kolonnen (und nicht durcheinander).

Ein Abstand entlang der Trajektorie respektive Fahrschlauch, die respektive den das eigene Fahrzeug fahren wird, zu allen weiteren oder anderen Verkehrsteilnehmern ist größer oder größer gleich einem vorbestimmten Mindestabstand, also insbesondere ausreichend groß.

Ein Abstand entlang der Trajektorie respektive des Fahrschlauchs, die respektive den das Fahrzeug fahren wird, zu allen anderen oder weiteren stationären Hindernissen ist größer oder größer gleich einem vorbestimmten Mindestabstand, also insbesondere ausreichend groß.

Eine Relativgeschwindigkeit des Fahrzeugs zu anderen Verkehrsteilnehmern ist in einem zugelassenen Bereich.

Eine Abweichung von einem gesetzeskonformen Verhalten, insbesondere von einem StVO-Verhalten, ist in einem vorgegebenen Bereich, zum Beispiel ein maximales Herausfahren aus der eigenen Spur um x Meter, wobei x ein Platzhalter für einen konkreten Zahlenwert ist.

Nach einer Ausführungsform ist eine Fahrerüberwachung vorgesehen, die insbesondere als ein zusätzliches Kriterium für die Entscheidung, ob umgeschaltet werden soll oder nicht, verwendet wird. Beispielsweise ist vorgesehen, dass ein Fahrer informiert wird, dass ein Umschalten vom ersten in den zweiten oder vom zweiten in den ersten (beispielsweise ein Abweichen vom StVO-Verhalten, wenn vom ersten in den zweiten Betriebsmodus geschaltet wird) beabsichtigt ist und somit eine erhöhte Aufmerksamkeit gefordert ist.

Zusätzliche Bedingungen, die für ein Umschalten erfüllt sein müssen, können dann nach einer Ausführungsform eine oder mehrere der folgenden Bedingungen sein:
Ein Fahrer hat das Abweichen vom StVO-Verhalten bestätigt, also allgemein der Fahrer hat das Umschalten bestätigt.

Der Fahrer ist nicht abgelenkt und überwacht das Geschehen, zum Beispiel hat er seinen Blick auf die Straße gerichtet.

Sollten zumindest einige, vorzugsweise alle, der vorstehend genannten Bedingungen erfüllt sein, so ist nach einer Ausführungsform vorgesehen, dass vom ersten in den zweiten Betriebsmodus umgeschaltet oder umgestellt wird, also beispielsweise von einem StVO-Verhalten auf ein Manöver-/Kolonnen-Verhalten.

Nach einer Ausführungsform ist vorgesehen, dass nach der Umstellung oder Umschaltung im zweiten Betriebsmodus analysiert wird, wann die Situation vorbei ist, die dazu führte, dass in den zweiten Betriebsmodus geschaltet wurde. Das heißt also zum Beispiel, dass analysiert wird, wann wieder auf ein StVO-Verhalten umgestellt oder umgeschaltet werden muss, also allgemein wann wieder in den ersten Betriebsmodus geschaltet werden muss. Die hierfür notwendigen Bedingungen gemäß weiteren Ausführungsformen ergeben sich in umgekehrter Analogie zu den Bedingungen und Kriterien hinsichtlich des Umschaltens vom ersten in den zweiten Betriebsmodus. Zum Beispiel wird zurückgeschaltet, wenn es kein vorausliegendes Hindernis mehr gibt respektive das Hindernis umfahren wurde. Zum Beispiel wird zurückgeschaltet, wenn ein Strömungsverhalten der Verkehrsteilnehmer gleichförmig ist. Zum Beispiel wird umgeschaltet, wenn vorausfahrende Fahrzeuge wieder zurück in ihre ursprüngliche Fahrspur fahren. Zum Beispiel wird umgeschaltet, wenn vorausfahrende Fahrzeuge wieder eine Fahrspur folgen, also innerhalb einer Fahrspur fahren.

## Patentansprüche

1. Verfahren zum Betreiben eines Fahrzeugs (301), wobei das Fahrzeug (301) in einem ersten Betriebsmodus, in welchem das Fahrzeug (301) basierend auf einer Erfassung von Fahrspurmarkierungen (409) einer Fahrspur autonom in der Fahrspur (403) fährt, und in einem zweiten Betriebsmodus betreibbar ist, in welchem das Fahrzeug (301) autonom einem vorausfahrenden Fahrzeug Fahrspurmarkierungen (409) ignorierend folgt, umfassend die folgenden Schritte:
- Betreiben (101) des Fahrzeugs (301) in einem der beiden Betriebsmodi,
- Erfassen (103) eines Fahrzeugumfelds,
- Umschalten (105) von dem einen Betriebsmodus der beiden Betriebsmodi in den anderen der beiden Betriebsmodi abhängig von dem erfassten Fahrzeugumfeld,
∘ **dadurch gekennzeichnet, dass** wenn das Fahrzeug (301) im ersten Betriebsmodus betrieben und basierend auf dem erfassten Fahrzeugumfeld ein dem Fahrzeug (301) vorausliegendes Hindernis (421) detektiert wird, in den zweiten Betriebsmodus umgeschaltet wird.

2. Verfahren nach Anspruch 1, wobei, wenn das Fahrzeug (301) im ersten Betriebsmodus betrieben und basierend auf dem erfassten Fahrzeugumfeld ein oder mehrere vorausfahrende ihre Fahrspur (403, 405, 407) ignorierende Fahrzeuge (411, 425) detektiert werden, in den zweiten Betriebsmodus umgeschaltet wird.

3. Verfahren nach einem der vorherigen Ansprüche, wobei, wenn das Fahrzeug (301) im ersten Betriebsmodus betrieben und basierend auf dem erfassten Fahrzeugumfeld ein ungleichförmiges Strömungsverhalten von weiteren Verkehrsteilnehmern detektiert wird, in den zweiten Betriebsmodus umgeschaltet wird.

4. Verfahren nach einem der vorherigen Ansprüche, wobei nur dann in den anderen Betriebsmodus umgeschaltet wird, wenn eine oder mehrere der folgenden Bedingungen erfüllt sind: eine Fahrzeuggeschwindigkeit ist in einem zugelassenen Bereich, eine Trajektorie respektive ein Fahrschlauch, die respektive in dem das Fahrzeug (301) fahren wird, ist respektive sind kollisionsfrei, weitere Fahrzeuge (411, 425) fahren in erkennbaren Kolonnen, ein Mindestabstand einer Trajektorie respektive eines Fahrschlauchs, die respektive in dem das Fahrzeug (301) fahren wird, zu weiteren Verkehrsteilnehmern ist respektive sind eingehalten, eine Relativgeschwindigkeit des Fahrzeugs (301) zu einem oder zu weiteren Verkehrsteilnehmern ist in einem zugelassenen Bereich, eine Abweichung von einem gesetzeskonformen Verhalten ist in einem vorgegebenen Bereich, zum Beispiel ist die Abweichung ein Herausfahren aus der eigenen Fahrspur (403) und zum Beispiel ist der vorgegebene Bereich dann eine maximale Distanzangabe.

5. Verfahren nach einem der vorherigen Ansprüche, wobei ein Fahrer überwacht wird und das Umschalten von dem einen in den anderen Betriebsmodus zusätzlich abhängig von der Fahrerüberwachung durchgeführt wird.

6. Verfahren nach Anspruch 5, wobei abhängig von der Fahrerüberwachung ein den Fahrer betreffendes Aufmerksamkeitsmaß ermittelt wird, wobei abhängig von einem Vergleich des ermittelten Aufmerksamkeitsmaß mit einem vorbestimmten Aufmerksamkeitsschwellwert umgeschaltet wird.

7. Verfahren nach einem der vorherigen Ansprüche, wobei ein Hinweis ausgegeben wird, dass ein Umschalten beabsichtigt ist.

8. Verfahren nach Anspruch 7, wobei nur dann von dem einen in den anderen Betriebsmodus umgeschaltet wird, wenn eine Umschaltbestätigung erfasst wird.

9. Verfahren nach einem der vorherigen Ansprüche, wobei, wenn das Fahrzeug (301) im zweiten Betriebsmodus betrieben wird, in den ersten Betriebsmodus nur dann umgeschaltet wird, wenn basierend auf dem erfassten Fahrzeugumfeld detektiert wird, dass eine Situation, welche dazu führte, dass vom ersten Betriebsmodus in den zweiten umgeschaltet wurde, vorbei ist.

10. Vorrichtung (201) zum Betreiben eines Fahrzeugs (301), wobei das Fahrzeug (301) in einem ersten Betriebsmodus, in welchem das Fahrzeug (301) basierend auf einer Erfassung von Fahrspurmarkierungen (409) einer Fahrspur autonom in der Fahrspur (403) fährt, und in einem zweiten Betriebsmodus betreibbar ist, in welchem das Fahrzeug (301) autonom einem vorausfahrenden Fahrzeug (301) Fahrspurmarkierungen (409) ignorierend folgt, umfassend:
- eine Steuerungseinrichtung (203) zum Betreiben des Fahrzeugs (301) in einem der beiden Betriebsmodi,
- eine Erfassungseinrichtung (205) zum Erfassen eines Fahrzeugumfelds, wobei
- die Steuerungseinrichtung (203) ausgebildet ist, von dem einen Betriebsmodus in den anderen der beiden Betriebsmodi abhängig von dem erfassten Fahrzeugumfeld umzuschalten
∘ **dadurch gekennzeichnet, dass** wenn das Fahrzeug (301) im ersten Betriebsmodus betrieben und basierend auf dem erfassten Fahrzeugumfeld ein dem Fahrzeug (301) vorausliegendes Hindernis (421) detektiert wird, in den zweiten Betriebsmodus umgeschaltet wird.

11. Computerprogramm, umfassend Programmcode zur Durchführung des Verfahrens nach einem der Ansprüche 1 bis 9, wenn das Computerprogramm auf einem Computer ausgeführt wird.

## Claims

1. Method for operating a vehicle (301), wherein the vehicle (301) is able to be operated in a first operating mode in which the vehicle (301) drives autonomously in a lane (403) based on the acquisition of lane markings (409) of the lane, and in a second operating mode in which the vehicle (301) autonomously follows a vehicle travelling in front, ignoring lane markings (409), comprising the following steps:
- operating (101) the vehicle (301) in one of the two operating modes,
- acquiring (103) vehicle surroundings,
- changing over (105) from one operating mode of the two operating modes to the other of the two operating modes depending on the acquired vehicle surroundings,
o **characterized in that**, when the vehicle (301) is being operated in the first operating mode and an obstacle (421) located in front of the vehicle (301) is detected based on the acquired vehicle surroundings, a changeover takes place to the second operating mode.

2. Method according to Claim 1, wherein, when the vehicle (301) is being operated in the first operating mode and one or more vehicles (411, 425) travelling in front and ignoring their lane (403, 405, 407) are detected based on the acquired vehicle surroundings, a changeover takes place to the second operating mode.

3. Method according to either of the preceding claims, wherein, when the vehicle (301) is being operated in the first operating mode and non-uniform flow behaviour of other road users is detected based on the acquired vehicle surroundings, a changeover takes place to the second operating mode.

4. Method according to one of the preceding claims, wherein a changeover takes place to the other operating mode only when one or more of the following conditions are met: a vehicle speed is in a permitted range, a trajectory, respectively a driving path, that is going to be driven, respectively driven on, by the vehicle (301) is collision-free, other vehicles (411, 425) are driving in recognizable columns, a minimum distance of a trajectory, respectively of a driving path, which, respectively on which, the vehicle (301) is going to drive from other road users is complied with, a relative speed of the vehicle (301) with respect to one or more road users is in a permitted range, a deviation from legal behaviour is in a predefined range, for example the deviation is driving out of the ego lane (403) and for example the predefined range is then a maximum distance indication.

5. Method according to one of the preceding claims, wherein a driver is monitored and the changeover from one to the other operating mode is additionally performed depending on the driver monitoring.

6. Method according to Claim 5, wherein a degree of attention relating to the driver is determined depending on the driver monitoring, wherein a changeover takes place depending on a comparison between the determined degree of attention and a predetermined attention threshold.

7. Method according to one of the preceding claims, wherein an indication is output that a changeover is intended.

8. Method according to Claim 7, wherein a changeover takes place from one to the other operating mode only when a changeover confirmation is acquired.

9. Method according to one of the preceding claims, wherein, when the vehicle (301) is being operated in the second operating mode, a changeover takes place to the first operating mode only when there is detection, based on the acquired vehicle surroundings, that a situation that led to a changeover from the first operating mode to the second has passed.

10. Device (201) for operating a vehicle (301), wherein the vehicle (301) is able to be operated in a first operating mode in which the vehicle (301) drives autonomously in a lane (403) based on the acquisition of lane markings (409) of the lane, and in a second operating mode in which the vehicle (301) autonomously follows a vehicle (301) travelling in front, ignoring lane markings (409), comprising:
- a control apparatus (203) for operating the vehicle (301) in one of the two operating modes,
- an acquisition apparatus (205) for acquiring vehicle surroundings, wherein
- the control apparatus (203) is designed to change over from one operating mode to the other of the two operating modes depending on the acquired vehicle surroundings,
o **characterized in that**, when the vehicle (301) is being operated in the first operating mode and an obstacle (421) located in front of the vehicle (301) is detected based on the acquired vehicle surroundings, a changeover takes place to the second operating mode.

11. Computer program comprising program code for performing the method according to one of Claims 1 to 9 when the computer program is executed on a computer.

## Revendications

1. Procédé de fonctionnement d'un véhicule (301), le véhicule (301) pouvant fonctionner dans un premier mode de fonctionnement, dans lequel le véhicule (301) roule de manière autonome dans la voie de roulement (403) sur la base d'une détection de repères (409) d'une voie de roulement, et dans un deuxième mode de fonctionnement dans lequel le véhicule (301) suit de manière autonome un véhicule précédent en ignorant les repères (409), ledit procédé comprenant les étapes suivantes :
- faire fonctionner (101) le véhicule (301) dans l'un des deux modes de fonctionnement,
- détecter (103) un environnement de véhicule,
- passer (105) d'un mode de fonctionnement parmi les deux modes de fonctionnement à l'autre des deux modes de fonctionnement en fonction de l'environnement de véhicule détecté,
∘ **caractérisé en ce que**, lorsque le véhicule (301) fonctionne dans le premier mode de fonctionnement et qu'un obstacle (421) présent devant le véhicule (301) est détecté sur la base de l'environnement de véhicule détecté, le véhicule passe dans le deuxième mode de fonctionnement.

2. Procédé selon la revendication 1, lorsque le véhicule (301) fonctionne dans le premier mode de fonctionnement et qu'un ou plusieurs véhicules précédents (411, 425) qui ignorent leur voie de roulement (403, 405) sont détectés sur la base de l'environnement de véhicule détecté, le véhicule passe dans le deuxième mode de fonctionnement.

3. Procédé selon l'une des revendications précédentes, lorsque le véhicule (301) fonctionne dans le premier mode de fonctionnement et qu'un comportement d'écoulement non uniforme est détecté par d'autres usagers de la route sur la base de l'environnement de véhicule détecté, le véhicule passe dans le deuxième mode de fonctionnement.

4. Procédé selon l'une des revendications précédentes, le passage dans l'autre mode de fonctionnement n'étant effectué que lorsqu'une ou plusieurs des conditions suivantes sont remplies : une vitesse de véhicule est dans une plage autorisée, une trajectoire ou un couloir de roulement, qui sont empruntés par le véhicule (301), sont exempts de collision, d'autres véhicules (411, 425) roulent en colonnes reconnaissables, une distance minimale entre une trajectoire ou un couloir de roulement, qui sont empruntés par le véhicule (301), et d'autres usagers de la route est respectée, une vitesse relative du véhicule (301) par rapport à un usager de la route ou à d'autres usagers de la route est située dans une plage autorisée, un écart par rapport à un comportement légal est situé dans une plage spécifiée, par exemple l'écart est une sortie de sa propre voie de roulement (403) et par exemple la plage spécifiée est alors une spécification de distance maximale.

5. Procédé selon l'une des revendications précédentes, un conducteur étant surveillé et le passage de l'un à l'autre mode de fonctionnement étant également effectué en fonction de la surveillance du conducteur.

6. Procédé selon la revendication 5,
un niveau d'attention du conducteur étant déterminé en fonction de la surveillance du conducteur, un passage étant effectué en fonction d'une comparaison du niveau d'attention déterminé à une valeur de seuil d'attention prédéterminée.

7. Procédé selon l'une des revendications précédentes, une indication étant délivrée quant à l'imminence d'un passage.

8. Procédé selon la revendication 7, **caractérisé en ce qu'**un passage n'est effectué de l'un à l'autre mode de fonctionnement que si une confirmation de passage est détectée.

9. Procédé selon l'une des revendications précédentes, lorsque le véhicule (301) fonctionne dans le deuxième mode de fonctionnement, un passage dans le premier mode de fonctionnement n'est effectué que s'il est détecté sur la base de l'environnement de véhicule détecté qu'une situation qui a conduit au passage du premier mode de fonctionnement au deuxième mode de fonctionnement est terminée.

10. Dispositif (201) de fonctionnement d'un véhicule (301), le véhicule (301) pouvant fonctionner dans un premier mode de fonctionnement, dans lequel le véhicule (301) roule de manière autonome dans la voie de roulement (403) sur la base d'une détection de repères (409) d'une voie de roulement, et dans un deuxième mode de fonctionnement dans lequel le véhicule (301) suit de manière autonome un véhicule (301) précédent en ignorant les repères (409), ledit dispositif comprenant :
- une unité de commande (203) destinée à faire fonctionner le véhicule (301) dans l'un des deux modes de fonctionnement,
- une unité de détection (205) destinée à détecter un environnement de véhicule,
- l'unité de commande (203) étant conçue pour passer d'un mode de fonctionnement à l'autre des deux modes de fonctionnement en fonction de l'environnement de véhicule détecté,
O **caractérisé en ce que**, lorsque le véhicule (301) fonctionne dans le premier mode de fonctionnement et qu'un obstacle (421) présent devant le véhicule (301) est détecté sur la base de l'environnement de véhicule détecté, le véhicule passe dans le deuxième mode de fonctionnement.

11. Logiciel comprenant un code programme destiné à mettre en œuvre le procédé selon l'une des revendications 1 à 9, lorsque le logiciel est exécuté sur un ordinateur.
